# EUROPEAN PATENT APPLICATION

(11) **EP 4 603 374 A1**
(43) Date of publication of application: **20.08.2025**
(21) Application number: 24828725.2
(22) Date of filing: 27.01.2024
(51) Int. Cl.: B62M 7/12, B62M 6/40

(54) **WHEEL-SIDE DUAL MOTOR DRIVING SYSTEM OF MOTORCYCLE**

(30) Priority: 03.01.2024 CN 202410011887
(71) Applicant: Zhejiang Xin Precision Machinery Co., Ltd., Jiaojiang District Taizhou, Zhejiang 318099 (CN)
(72) Inventor: YU, Wenyong, Taizhou, Zhejiang 318099 (CN); JIN, Jianhua, Taizhou, Zhejiang 318099 (CN)
(74) Representative: Ipey
(86) International application number: PCT/CN2024/074345
(87) International publication number: WO 2025/145480

(57) **Abstract**

Disclosed is a motorcycle wheel-side dual-motor drive system, including a rear fork fixing seat connected to a frame. Two sides of the rear fork fixing seat are provided with left and right power rear fork housings, left and right drive motors are provided in the corresponding left and right power rear fork housings, respectively, both the left and right drive motors are in transmission connection with an output shaft of a drive wheel, and transmission between the right drive motor and the output shaft is one-way transmission. By dividing a conventionally designed mid-drive motor or hub motor into two smaller wheel-side motors, the weight distribution of the entire vehicle is more reasonable and the handling performance is better; more space is available for larger batteries, increasing the endurance mileage; the waterproof performance of the motor is improved; and more power-saving performance and more coordinated appearance are provided.

## Description

### Technical Field

The present disclosure belongs to the field of motorcycle drive technology, and more specifically relates to a pure electric motorcycle wheel-side dual-motor drive system.

### Background

With the development and popularization of automotive electrification technology, electrification technology is gradually expanding to other fields, such as ship electrification, engineering machinery electrification, pure electric motorcycles and other industries. Previously, electric drive was mostly used in small-displacement models such as electric bicycles and mopeds in the motorcycle industry. In recent years, electric drive technology has also gradually been applied to large motorcycles.

In the field of electric drive of motorcycles, commonly used structures include hub motors and mid-drive motors. Even with simple structures, the hub motors are heavy and inefficient, which not only affects the overall handling performance of the vehicle but also increases material costs and results in poor waterproof sealing performance. Meanwhile, the mid-drive motors have longer transmission paths and occupy the limited battery space, consequently reducing the endurance mileage of the vehicle.

### Summary

Aiming at the shortcomings of the related art, the present disclosure provides a motorcycle wheel-side dual-motor drive system, which divides a conventionally designed mid-drive motor or hub motor into two smaller wheel-side motors, thus achieving innovation in the driving mode of two wheeled motorcycles and having significant advantages.

In order to achieve the above purpose, the present disclosure adopts the following technical solution: a motorcycle wheel-side dual-motor drive system, including a rear fork fixing seat connected to a frame, two sides of the rear fork fixing seat being provided with a left power rear fork housing and a right power rear fork housing, a left drive motor being provided in the left power rear fork housing, a right drive motor being provided in the right power rear fork housing, both the left drive motor and the right drive motor being in transmission connection with an output shaft of a drive wheel, and transmission between the right drive motor and the output shaft being one-way transmission.

Further, a left transmission mechanism is provided between the left drive motor and the drive wheel, the left transmission mechanism includes a left driving gear shaft and a left driven gear, the left driving gear shaft is connected to the left drive motor, the left driven gear is connected to the output shaft, and the left driving gear shaft is engaged with the left driven gear.

Further, a right transmission mechanism is provided between the right drive motor and the drive wheel, the right transmission mechanism includes a right driving gear shaft, a right driven gear and a one-way clutch, the right driving gear shaft is connected to the right drive motor, the right driven gear is connected to the one-way clutch, the right driving gear shaft is engaged with the right driven gear, and the one-way clutch is connected to the output shaft.

Further, an inner spline sleeve is provided on a rotating section of the output shaft in the right power rear fork housing, a corresponding outer spline is provided on the rotating section of the output shaft, the right driven gear is connected to the inner spline sleeve, and the one-way clutch is located between the right driven gear and the inner spline sleeve.

Further, an end portion of the rotating section of the output shaft in the right power rear fork housing is in threaded connection with a locking nut, and the locking nut is in contact with the inner spline sleeve.

Further, a needle bearing is provided between the right driven gear and the output shaft.

Further, a spacer sleeve is provided between the output shaft and the wheel, and one end of the spacer sleeve is in contact with the inner spline sleeve.

Further, both the left power rear fork housing and the right power rear fork housing are connected to the rear fork fixing seat through bolts and nuts.

Compared with the related art, the present disclosure has the following beneficial effects: the left drive motor is the main drive, and the right drive motor is the auxiliary drive, that is, the left drive motor is responsible for full power output, the left drive motor will always start as long as the vehicle needs to run, and the right drive motor may start when needed to provide auxiliary drive to the drive wheel. By dividing a conventionally designed mid-drive motor or hub motor into two smaller wheel-side motors, the weight distribution of the entire vehicle is more reasonable and the handling performance is better; the space occupied by the motor is also reduced, thus allowing for larger batteries and increasing the endurance mileage; the problems of performance degradation and poor waterproof performance caused by increased rotational inertia due to the hub motor are alleviated; independent left and right drive and control can better keep the entire vehicle in a power-saving operating state; and the integrated design makes the overall appearance of the entire vehicle more coordinated and attractive.

### Brief Description of Figures

FIG. 1 illustrates a schematic three-dimensional structural diagram of a motorcycle wheel-side dual-motor drive system according to the present disclosure.
FIG. 2 illustrates a front cross-sectional view of a motorcycle wheel-side dual-motor drive system according to the present disclosure.
FIG. 3 illustrates an enlarged view of position A in FIG. 2.
FIG. 4 illustrates a lateral cross-sectional view of a motorcycle wheel-side dual-motor drive system according to the present disclosure.
FIG. 5 illustrates a schematic structural diagram of a left power rear fork housing of a motorcycle wheel-side dual-motor drive system according to the present disclosure.

Description of reference numerals: 1-rear fork fixing seat; 2-left power rear fork housing; 3-right power rear fork housing; 4-left drive motor; 5-right drive motor; 6-drive wheel; 7-output shaft; 8-left driving gear shaft; 9-left driven gear; 10-right driving gear shaft; 11-right driven gear; 12-one-way clutch; 13-inner spline sleeve; 14-locking nut; 15-needle bearing; and 16-spacer sleeve.

### Detailed Description

In the description of the present disclosure, it should be understood that for directional words, directional and positional relationships indicated by terms such as "central", "transverse (X)", "longitudinal (Y)", "vertical (Z)", "length", "width", "thickness", "up", "down", "front", "back", "left", "right", "vertical", "horizontal", "top", "bottom", "inside", "outside", "clockwise" and "anticlockwise" are directional or positional relationships based on the drawings, which are only for the purposes of conveniently describing the present disclosure and simplifying the description, instead of indicating or implying that the device or component referred to must have a specific orientation or be constructed and operated in a specific orientation, and cannot be understood as limiting the specific scope of protection of the present disclosure.

In addition, the terms "first" and "second" are only for the purpose pf description and cannot be understood as indicating or implying relative importance or implying the quantity of technical features. Therefore, features limited by "first" and "second" may explicitly or implicitly include one or more of these features. In the description of the present disclosure, the meanings of "multiple" and "several" are two or more, unless otherwise specified.

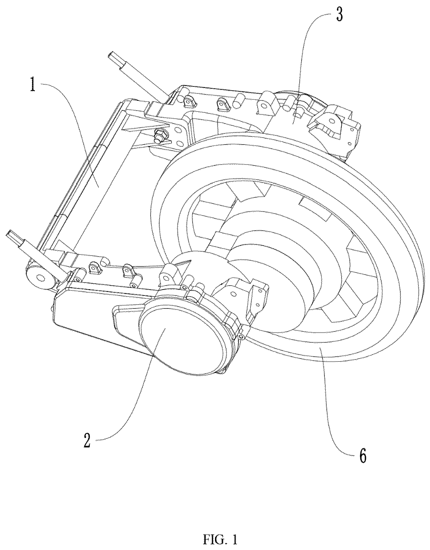

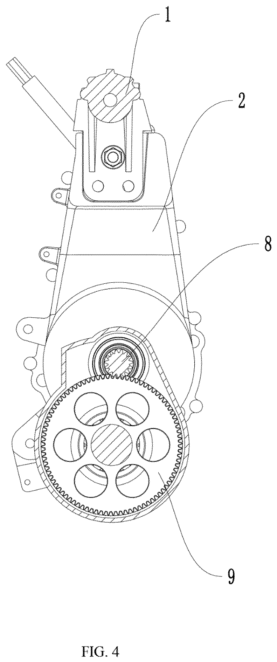

The prevent disclosure will be further described with reference to FIG. 1 to FIG. 5.

A motorcycle wheel-side dual-motor drive system includes a rear fork fixing seat 1 connected to a frame. Two sides of the rear fork fixing seat 1 are provided with a left power rear fork housing 2 and a right power rear fork housing 3. A left drive motor 4 is provided in the left power rear fork housing 2. A right drive motor 5 is provided in the right power rear fork housing 3. Both the left drive motor 4 and the right drive motor 5 are in transmission connection with an output shaft 7 of a drive wheel 6. Transmission between the right drive motor 5 and the output shaft 7 is one-way transmission.

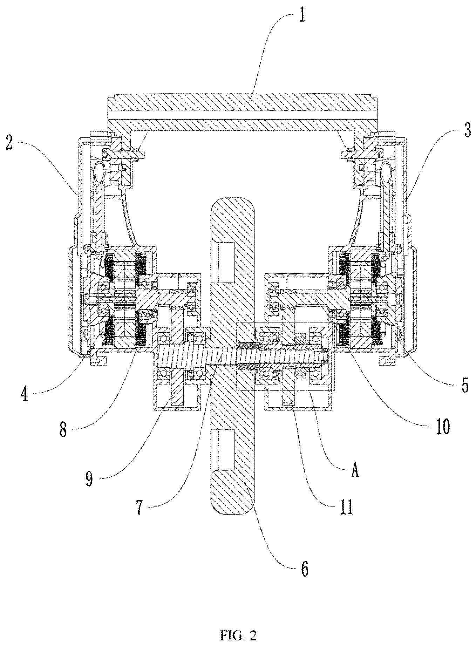

Referring to FIG. 2, exemplarily, in this embodiment, a left transmission mechanism is provided between the left drive motor 4 and the drive wheel 6, the left transmission mechanism includes a left driving gear shaft 8 and a left driven gear 9, the left driving gear shaft 8 is connected to the left drive motor 4, the left driven gear 9 is connected to the output shaft 7, and the left driving gear shaft 8 is engaged with the left driven gear 9.

Referring to FIG. 2, exemplarily, in this embodiment, a right transmission mechanism is provided between the right drive motor 5 and the drive wheel 6, the right transmission mechanism includes a right driving gear shaft 10, a right driven gear 11 and a one-way clutch 12, the right driving gear shaft 10 is connected to the right drive motor 5, the right driven gear 11 is connected to the one-way clutch 12, the right driving gear shaft 10 is engaged with the right driven gear 11, and the one-way clutch 12 is connected to the output shaft 7.

Exemplarily, in this embodiment, the engagement between the left driving gear shaft 8 and the left driven gear 9 and the engagement between the right driving gear shaft 10 and the right driven gear 11 are both bevel gear engagement.

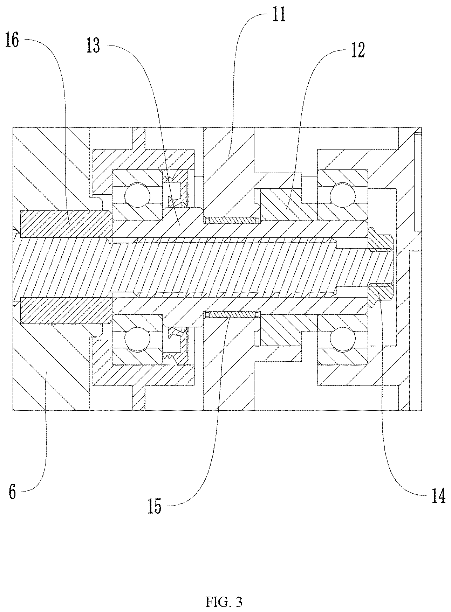

Referring to FIG. 2 and FIG. 3, exemplarily, in this embodiment, an inner spline sleeve 13 is provided on a rotating section of the output shaft 7 in the right power rear fork housing 3, a corresponding outer spline is provided on the rotating section of the output shaft 7, the right driven gear 11 is connected to the inner spline sleeve 13, and the one-way clutch 12 is located between the right driven gear 11 and the inner spline sleeve 13.

Exemplarily, in this embodiment, a bearing is provided between the left driving gear shaft 8 and the left power rear fork housing 2, a bearing is provided between the portion of the output shaft 7 in the left power rear fork housing 2 and the left power rear fork housing 2, a bearing is provided between the right driving gear shaft 10 and the right power rear fork housing 3, a bearing is provided between the inner spline sleeve 13 and the right power rear fork housing 3, and oil seals are provided on both an input end and an output end for gear transmission in the power rear fork housing.

Referring to FIG. 3, exemplarily, in this embodiment, an end portion of the rotating section of the output shaft 7 in the right power rear fork housing 3 is in threaded connection with a locking nut 14, and the locking nut 14 is in contact with the inner spline sleeve 13.

Referring to FIG. 3, exemplarily, in this embodiment, a needle bearing 15 is provided between the right driven gear 11 and the output shaft 7, thus facilitating the support of the right driven gear 11 and the relative rotation between the inner spline sleeve 13 and the right driven gear 11.

Referring to FIG. 3, exemplarily, in this embodiment, a spacer sleeve 16 is provided between the output shaft 7 and the drive wheel 6, and one end of the spacer sleeve 16 is in contact with the inner spline sleeve 13. Through the cooperation between the spacer sleeve 16 and the spline sleeve, the drive wheel 6 is tightly clamped onto the left power rear fork housing 2 and the right power rear fork housing 3, thus preventing relative rotation between the drive wheel 6 and the output shaft 7.

Referring to FIG. 2, exemplarily, in this embodiment, both the left power rear fork housing 2 and the right power rear fork housing 3 are connected to the rear fork fixing seat 1 through bolts and nuts, thus facilitating the assembling and disassembling of the drive wheel 6 and the drive system.

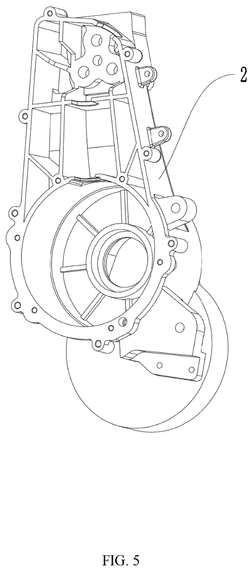

Referring to FIG. 5, exemplarily, in this embodiment, a motor chamber for mounting the left drive motor 4 is provided on the left power rear fork housing 2, a connection chamber is located above the motor chamber and used for connecting the rear fork fixing seat 1, a cable chamber is also provided between the connection chamber and the motor chamber to serve as a transition between the connection chamber and the motor chamber, and a cable connecting the motor passes through the cable chamber.

Referring to FIG. 1 to FIG. 5, the left drive motor 4 is the main drive, and the right drive motor 5 is the auxiliary drive, that is, the left drive motor 4 is responsible for full power output, the left drive motor 4 will always start as long as the vehicle needs to run, and the right drive motor 5 may start when needed to provide auxiliary drive to the drive wheel 6.

After the left drive motor 4 is started, it drives the left gear shaft and the left driven gear 9 to rotate, thus driving the output shaft 7 and the drive wheel 6 to rotate to achieve the driving of the vehicle.

When the right drive motor 5 does not participate in driving, the left drive motor 4 drives the vehicle alone. In this case, the output shaft 7 of the drive wheel 6 drives the inner spline sleeve 13 to rotate. However, due to the automatic disengagement of the one-way clutch 12 in this case, the right driven gear 11 on the inner spline sleeve 13 is stationary and does not rotate, thus preventing the power outputted by the left drive motor 4 from driving the right drive motor 5 to idle, avoiding wasting power, and reducing the loss of movable parts in the right power rear fork housing 3.

When the right drive motor 5 participates in driving, it drives the right driving gear shaft 10 and the right driven gear 11. In this case, the one-way clutch 12 is in a locked state, which can drive the inner spline sleeve 13 to rotate through the right driven gear 11, and then transmit the power to the output shaft 7, thus working together with the left drive motor 4.

Exemplarily, in this embodiment, main drive structures may be designed on both the left and right sides, the left and right drive motors may drive the vehicle at any time, and the gear transmission between the motor and the output shaft 7 may be changed to two-stage reduction, or the left and right gear transmissions may be set to different gear ratios.

What are described above are only exemplary embodiments of the present disclosure, and the scope of protection of the present disclosure is not limited to the above embodiments. Any technical solution belonging to the inventive concept falls within the scope of protection of the present disclosure. It should be pointed out that those skilled in the art may obtain several improvements and modifications without departing from the principle of the present disclosure, which should also be considered within the scope of protection of the present disclosure.

## Claims

1. A motorcycle wheel-side dual-motor drive system, comprising a rear fork fixing seat connected to a frame, two sides of the rear fork fixing seat being provided with a left power rear fork housing and a right power rear fork housing, a left drive motor being provided in the left power rear fork housing, a right drive motor being provided in the right power rear fork housing, both the left drive motor and the right drive motor being in transmission connection with an output shaft of a drive wheel, and transmission between the right drive motor and the output shaft being one-way transmission.

2. The motorcycle wheel-side dual-motor drive system according to claim 1, wherein a left transmission mechanism is provided between the left drive motor and the drive wheel, the left transmission mechanism comprises a left driving gear shaft and a left driven gear, the left driving gear shaft is connected to the left drive motor, the left driven gear is connected to the output shaft, and the left driving gear shaft is engaged with the left driven gear.

3. The motorcycle wheel-side dual-motor drive system according to claim 1, wherein a right transmission mechanism is provided between the right drive motor and the drive wheel, the right transmission mechanism comprises a right driving gear shaft, a right driven gear and a one-way clutch, the right driving gear shaft is connected to the right drive motor, the right driven gear is connected to the one-way clutch, the right driving gear shaft is engaged with the right driven gear, and the one-way clutch is connected to the output shaft.

4. The motorcycle wheel-side dual-motor drive system according to claim 3, wherein an inner spline sleeve is provided on a rotating section of the output shaft in the right power rear fork housing, a corresponding outer spline is provided on the rotating section of the output shaft, the right driven gear is connected to the inner spline sleeve, and the one-way clutch is located between the right driven gear and the inner spline sleeve.

5. The motorcycle wheel-side dual-motor drive system according to claim 4, wherein an end portion of the rotating section of the output shaft in the right power rear fork housing is in threaded connection with a locking nut, and the locking nut is in contact with the inner spline sleeve.

6. The motorcycle wheel-side dual-motor drive system according to claim 5, wherein a needle bearing is provided between the right driven gear and the output shaft.

7. The motorcycle wheel-side dual-motor drive system according to claim 6, wherein a spacer sleeve is provided between the output shaft and the wheel, and one end of the spacer sleeve is in contact with the inner spline sleeve.

8. The motorcycle wheel-side dual-motor drive system according to claim 1, wherein both the left power rear fork housing and the right power rear fork housing are connected to the rear fork fixing seat through bolts and nuts.
